# EUROPÄISCHE PATENTSCHRIFT

(11) **EP 2 905 493 B1**
(45) Veröffentlichungstag und Bekanntmachung des Hinweises auf die Patenterteilung: **09.01.2019**
(21) Anmeldenummer: 14000458.1
(22) Anmeldetag: 08.02.2014
(51) Int. Cl.: F16D 23/12, A01D 34/68, F16D 67/02

(54) **Arbeitsgerät mit einer Kupplung**
Work device with a coupling
Appareil de travail avec un accouplement

(43) Veröffentlichungstag der Anmeldung: 12.08.2015
(73) Patentinhaber: Andreas Stihl AG & Co. KG, 71336 Waiblingen (DE)
(72) Erfinder: Gottinger, Clemens, 6320 Angerberg (AT); Duregger, Georg, 6342 Niederndorf (DE)
(74) Vertreter: Reinhardt, Annette

(56) Entgegenhaltungen:
- DE-A1-102004 001 569
- GB-A- 2 113 794
- JP-A- S6 155 412
- US-A- 4 333 303
- US-A- 4 466 233
- US-A- 4 730 710
- US-A- 5 570 765
- US-A1- 2013 306 424

## Beschreibung

Die Erfindung betrifft ein Arbeitsgerät der im Oberbegriff des Anspruchs 1 angegebenen Gattung.

Aus der US 4,466,233 ist ein Arbeitsgerät, nämlich ein Rasenmäher mit einem Antriebsmotor bekannt, der über eine Kupplung ein Messer antreibt. Die Kupplung wird über einen Hebelmechanismus ein- und ausgekuppelt.

Die maximale Kraft entlang der Drehachse der Kupplung zum Ein- und Auskuppeln ist im Wesentlichen durch die Hebellänge begrenzt. Die Hebellänge wiederum ist durch die Baugröße des Schmutzfanggehäuses begrenzt. Dadurch ist die maximale Kraft zum Ein- und Auskuppeln von der Baugröße des Rasenmähers abhängig und kann nicht beliebig erhöht werden.

Aus der US 4,730,710 geht eine Kupplungseinrichtung für einen Rasenmäher hervor, die eine Verschiebekulisse besitzt. Die Verschiebekulisse umfasst ein inneres, feststehendes Teil, in das Führungsprofile eines äußeren, bewegten Teils eingreifen. Aufgrund der Anordnung der Führungselemente an der Außenwand des feststehenden Teils ist ein Abschnitt der Führungselemente zur Umgebung offen und kann dadurch verschmutzen.

Die US 5,570,765 offenbart eine Kupplungseinrichtung mit einer axial beweglichen Lagerscheibe, die kreisförmige Aufnahmen besitzt. In den kreisförmigen Aufnahmen sind Kugeln angeordnet, die bei einer Drehbewegung der Betätigungsscheibe eine axiale Bewegung der Betätigungsscheibe bewirken.

Aus der DE 10 2004 001 569 A1 geht eine Betätigungseinrichtung für eine Reibungskupplungseinrichtung hervor, bei der eine Drehbewegung des Betätigungsglieds über Roll- oder Wälzkörper, die sich an einer Wälzkörperbahn eines Stützglieds abstützen, in eine Translationsbewegung des Betätigungsglieds umgesetzt wird.

Der Erfindung liegt die Aufgabe zugrunde, ein Arbeitsgerät der gattungsgemäßen Art zu schaffen, das einen Kupplungsmechanismus besitzt, mit welchem große Kräfte in Richtung der Drehachse übertragbar sind.

Diese Aufgabe wird durch ein Arbeitsgerät mit den Merkmalen des Anspruchs 1 gelöst.

Gemäß der Erfindung umfasst das Arbeitsgerät eine Betätigungseinrichtung mit einem feststehenden Teil, einem relativ zum feststehenden Teil bewegten Teil und einer Verschiebekulisse, wobei die Verschiebekulisse durch eine Drehung des bewegten Teils um die Drehachse relativ zum feststehenden Teil das bewegte Teil in Richtung der Drehachse bewegt und damit eine Kupplung einkuppelt und auskuppelt. Dadurch ist es möglich, in Richtung der Drehachse eine große Kraft auszuüben. Die Betätigungseinrichtung kann einfach und robust ausgeführt werden.

Die Verschiebekulisse umfasst mindestens zwei Führungsprofile und mindestens ein Führungselement. Am feststehenden Teil ist das Führungsprofil ausgebildet. Das Führungsprofil ist an einer zur Drehachse parallelen Innenwand mit kreisförmigem Querschnitt ausgebildet. Vorzugsweise ist die Innenwand konzentrisch zur Drehachse angeordnet. Am bewegten Teil ist das Führungselement ausgebildet. Mit der Verschiebung des Führungselements entlang des Führungsprofils ist die Drehbewegung des bewegten Teils in eine Translationsbewegung in Richtung der Drehachse transformierbar. Die Abhängigkeit der Translationsbewegungsrate des bewegten Teils in Richtung der Drehachse von der Drehrate des bewegten Teils ist durch die Steigung des Führungsprofils in Richtung der Drehachse vorgegeben. Das Führungsprofil führt das Führungselement entlang mindestens einer Führungsfläche. Die Kraftübertragung zwischen bewegtem Teil und feststehendem Teil erfolgt entlang der Führungsfläche.

Das Führungsprofil besitzt mindestens eine Führungsfläche. Das Führungsprofil führt das Führungselement entlang der Führungsfläche. Vorteilhaft ist eine Umfangslänge der Führungsfläche in Umfangrichtung länger als eine Radiallänge der Führungsfläche in Radialrichtung der Innenwand. Damit wird eine möglichst große Führungsfläche ermöglicht und gleichzeitig eine Führung zwischen bewegtem Teil und feststehendem Teil erreicht. Das bewegte Teil ist stabil und sicher vom feststehenden Teil geführt. Die Radialrichtung steht senkrecht zur Umfangsrichtung und zeigt vom Kreismittelpunkt des kreisförmigen Querschnitts der Innenwand weg. Der kreisförmige Querschnitt führt das bewegte Teil innerhalb des feststehenden Teils. Zweckmäßig führt die Innenwand des feststehenden Teils das bewegte Teil. Vorzugsweise ist das bewegte Teil innerhalb des feststehenden Teils durch die Verschiebekulisse, insbesondere durch das Zusammenwirken von Führungsprofil mit Führungselement, geführt.

Die Umfangslänge der Führungsfläche eines Führungsprofils erstreckt sich zweckmäßig über mindestens 5% des Umfangs der Innenwand. Besonders zweckmäßig beträgt die Umfangslänge der Führungsfläche zwischen 10% und 33%, insbesondere zwischen 15% und 21% des Umfangs der Innenwand. Damit erstreckt sich die Führungsfläche des Führungsprofils über einen weiten Bereich entlang der Innenwand. Das Führungsprofil führt das Führungselement stabil, wodurch eine gute Führung zwischen bewegtem und feststehendem Teil erreicht wird.

Vorzugsweise ist die Erstreckung des Führungsprofils in Umfangsrichtung der Innenwand kleiner als die Erstreckung des Führungselements in Umfangsrichtung der Innenwand. Damit kann gewährleistet sein, dass das Führungselement stets das Führungsprofil führt. Eine stabile Führung des bewegten Teils wird dadurch erreicht.

Vorteilhaft führt das Führungsprofil das Führungselement beim Einkuppeln entlang einer ersten Führungsfläche. Vorteilhaft führt das Führungsprofil das Führungselement beim Auskuppeln entlang einer zweiten Führungsfläche. Am Führungselement ist mindestens eine Berührfläche angeordnet. Die Berührfläche besitzt eine Innenlänge. Die Innenlänge ist die Länge der Längsseite der Berührfläche, die der Innenwand zugewandt ist. Die Umfangslänge mindestens einer Führungsfläche beträgt zweckmäßig mindestens 5% des Umfangs der Innenwand und die Innenlänge der Berührfläche beträgt zweckmäßig mindestens 5% des Umfangs der Innenwand. Die Umfangslänge mindestens einer Führungsfläche beträgt besonders zweckmäßig mindestens 10%, insbesondere mindestens 15%, des Umfangs der Innenwand, die Innenlänge mindestens einer Berührfläche beträgt besonders zweckmäßig mindestens 10%, insbesondere mindestens 20%, des Umfangs der Innenwand. Die flächige Kraftübertragung verhindert erhöhte Druckspitzen sowohl am Führungselement, als auch am Führungsprofil. Damit können große Kräfte übertragen werden. Eine Schädigung der Bauteile wird verhindert.

Die erste, obere Führungsfläche und die zweite, untere Führungsfläche sind am Führungsprofil angeordnet. Eine obere Berührfläche und eine untere Berührfläche sind am Führungselement angeordnet. Beim Einkuppeln berührt die erste, obere Führungsfläche vorzugsweise die obere Berührfläche. Beim Auskuppeln berührt die zweite, untere Führungsfläche vorzugsweise die untere Berührfläche. Die Innenlänge der oberen Berührfläche beträgt zweckmäßig mindestens 5% des Umfangs der Innenwand. Besonders zweckmäßig beträgt die Innenlänge der oberen Berührfläche mindestens 10%, insbesondere zwischen 20% und 50% des Umfangs der Innenwand. Die Innenlänge der unteren Berührfläche beträgt zweckmäßig mindestens 5% des Umfangs der Innenwand.

Besonders zweckmäßig beträgt die Innenlänge der unteren Berührfläche mindestens 10%, insbesondere zwischen 20% und 50% des Umfangs der Innenwand. Dadurch ist das bewegte Teil sowohl beim Einkuppeln als auch beim Auskuppeln in Richtung der Drehachse geführt. Eine flächige Kraftübertragung zwischen Führungselement und Führungsprofil wird sowohl beim Einkuppeln als auch beim Auskuppeln erreicht. Die Kraftübertragung in Richtung der Drehachse zwischen bewegtem Teil und feststehendem Teil erfolgt beim Einkuppeln über die erste Führungsfläche. Beim Auskuppeln erfolgt die Kraftübertragung in Richtung der Drehachse zwischen bewegtem Teil und feststehendem Teil über die zweite Führungsfläche. Die erste Führungsfläche und die zweite Führungsfläche sind auf gegenüberliegenden Seiten des Führungsprofils angeordnet. Das feststehende Teil umfasst mindestens zwei, insbesondere drei Führungsprofile. Zweckmäßig umfasst das feststehende Teil vier Führungsprofile. Durch die Verwendung mehrerer Führungsprofile ist die Kraftübertragung zwischen feststehendem Teil und bewegtem Teil auf mehrere Führungsprofile verteilt. Die übertragbare Kraft in Richtung der Drehachse kann damit erhöht werden. Bei symmetrischer Anordnung der Führungsprofile ist auch die Kraftübertragung symmetrisch. Vorzugsweise sind in der Verschiebekulisse Toleranzen zwischen bewegtem Teil und feststehendem Teil vorgesehen, wobei die Toleranzen ein Spiel zwischen bewegtem Teil und feststehendem Teil zulassen. Aufgrund der Toleranzen kann die Richtung der Translationsbewegung des bewegten Teils von der Richtung der Drehachse um bis zu 5° abweichen.

Vorteilhaft ergibt die Summe aller Umfangslängen der Führungsflächen, die beim Einkuppeln mit den Berührflächen in Kontakt sind, in Umfangsrichtung der Innenwand mindestens 40%, des Umfangs der Innenwand. Besonders zweckmäßig beträgt die Summe aller Umfangslängen der Führungsflächen, die beim Einkuppeln mit den Berührflächen in Kontakt sind, in Umfangsrichtung der Innenwand zwischen 40% und 80%, insbesondere zwischen 50% und 70% des Umfangs der Innenwand. Vorteilhaft ergibt die Summe aller Umfangslängen der Führungsflächen, die beim Auskuppeln mit den Berührflächen in Kontakt sind, in Umfangsrichtung der Innenwand mindestens 40%, des Umfangs der Innenwand. Besonders zweckmäßig beträgt die Summe aller Umfangslängen der Führungsflächen, die beim Auskuppeln mit den Berührflächen in Kontakt sind, in Umfangsrichtung der Innenwand zwischen 40% und 80%, insbesondere zwischen 50% und 70% des Umfangs der Innenwand. Dadurch erstrecken sich die Führungsflächen über einen weiten Teil entlang der Innenwand, was zu einer stabilen Führung des bewegten Teils sowohl beim Einkuppeln als auch beim Auskuppeln führt. Vorteilhaft ergibt die Summe aller Innenlängen der Berührflächen, die beim Einkuppeln mit den Führungsflächen in Kontakt sind, in Umfangsrichtung der Innenwand mindestens 15%, vorzugsweise mindestens 50%, des Umfangs der Innenwand. Besonders zweckmäßig beträgt die Summe aller Innenlängen der Berührflächen, die beim Einkuppeln mit den Führungsflächen in Kontakt sind, in Umfangsrichtung der Innenwand zwischen 30% und 90%, insbesondere zwischen 60% und 80% des Umfangs der Innenwand. Vorteilhaft ergibt die Summe aller Innenlängen der Berührflächen, die beim Auskuppeln mit den Führungsflächen in Kontakt sind, in Umfangsrichtung der Innenwand mindestens 15%, vorteilhaft mindestens 50%, des Umfangs der Innenwand. Besonders zweckmäßig beträgt die Summe aller Innenlängen der Berührflächen, die beim Auskuppeln mit den Führungsflächen in Kontakt sind, in Umfangsrichtung der Innenwand zwischen 30% und 90%, insbesondere zwischen 60% und 80% des Umfangs der Innenwand. Damit ist das bewegte Teil sowohl beim Einkuppeln als auch beim Auskuppeln stabil innerhalb des feststehenden Teils geführt.

Vorteilhaft besteht in Blickrichtung der Drehachse zwischen dem Ende eines ersten Führungsprofils und dem Anfang eines zweiten, benachbarten Führungsprofils in Umfangsrichtung ein Freiraum mit einer Freilänge. Durch den Freiraum ist das feststehende Teil im Gusswerkzeug schieberlos entformbar. Vorteilhaft ist die Freilänge genau so groß wie die Umfangslänge. Besonders vorteilhaft ist die Freilänge kleiner als die Umfangslänge. Vorzugsweise ist die Freilänge halb so groß wie die Umfangslänge. Die Kraftübertragung zwischen bewegtem und feststehendem Teil erfolgt zwischen Führungsprofil und Führungselement entlang der Führungsfläche. Durch eine lange Umfangslänge kann eine große Führungsfläche erreicht werden. Damit ist die Kraft auf eine größere Fläche verteilt.

Das Führungsprofil ist vorzugsweise als Rippe ausgebildet. Das Führungselement ist vorzugsweise als Nut ausgebildet. Die Querschnitte von Rippe und Nut sind zweckmäßig kongruent. Dadurch wird das Führungsprofil vom Führungselement ideal geführt. Gleichzeitig ist sowohl die Rippe, als auch die Nut technisch einfach herzustellen.

Vorteilhaft besitzt das Führungsprofil einen viereckigen Querschnitt. Insbesondere besitzt das Führungsprofil einen rechteckigen oder trapezförmigen Querschnitt. Der Querschnitt des Führungsprofils kann auch dreieckig sein.

Vorteilhaft umfasst das bewegte Teil einen Hebel. Vorteilhaft kragt der Hebel von der Drehachse aus. Das Drehmoment, das erforderlich ist, um das bewegte Teil zu drehen, ist vorteilhaft durch eine am auskragenden Hebel angreifende Kraft bewirkt. Die Länge des auskragenden Hebels beeinflusst das Drehmoment. Durch einen längeren effektiven Hebel kann bei gleichbleibender Kraft das Drehmoment erhöht werden. Dadurch erhöht sich die Kraft in Richtung der Drehachse. Vorteilhaft ist am auskragenden Hebel mindestens eine Bohrung, eine Aussparung, oder dergleichen vorgesehen. Die Krafteinleitung in das bewegte Teil, beispielsweise durch einen Bowdenzug, eine Feder, oder dergleichen, erfolgt an der Bohrung, an der Aussparung, oder dergleichen.

Vorteilhaft ist am bewegten Teil eine Rückstellfeder angeordnet. Vorteilhaft bewirkt die Rückstellfeder eine Drehung des bewegten Teils. Vorteilhaft kuppelt die Kupplung bei einer Drehung des bewegten Teils, die von der Rückstellfeder hervorgerufen ist, aus. Die Kupplung kuppelt aus, sobald die Kraft der Rückstellfeder größer ist als eine der Rückstellfederkraft entgegenwirkende Kraft. Damit ist eine Zwangsrückstellung des bewegten Teils möglich. Dadurch kuppelt die Kupplung aus. Vorteilhaft ist die Rückstellfeder zwischen bewegtem Teil und feststehendem Teil angeordnet. Das bewegte Teil dreht sich beim Einkuppeln und beim Auskuppeln der Kupplung relativ zum feststehenden Teil. Die zwischen bewegtem Teil und feststehendem Teil angeordnete Rückstellfeder bewirkt die Drehbewegung des bewegten Teils relativ zum feststehenden Teil.

Vorteilhaft ist ein Seilzug zur Betätigung der Betätigungseinrichtung vorgesehen. Anstelle eines Seilzuges kann auch ein mechanisch gekoppelter Hebel die Betätigungseinrichtung betätigen. Vorteilhaft ist eine Seilzugführung am feststehenden Teil angeordnet. Der Seilzug ist am Hebel des bewegten Teils befestigt. Eine Kraft, die beispielsweise durch einen Bediener im Bereich der Führungsvorrichtung in den Seilzug eingeleitet wird, wird durch den Seilzug zum Hebel des bewegten Teils geleitet. Ist die Kraft, die über den Seilzug in das bewegte Teil eingeleitet wird, größer als die Kraft der Rückstellfeder, so kuppelt die Kupplung über das bewegte Teil ein. Der Seilzug ist von einer Seilzugführung geführt. Die Seilzugführung ist am feststehenden Teil angeordnet. Dadurch kann der Seilzug nahezu orthogonal zum Hebel des bewegten Teils am bewegten Teil angeordnet sein.

Vorteilhaft wirkt zwischen dem feststehenden Teil und einem Kupplungsteil eine Bremseinrichtung. Dadurch ist gewährleistet, dass das aufgrund der Massenträgheit nachlaufende Messer beim Auskuppeln abgebremst wird. Das feststehende Teil ist vorteilhaft baulich nah an dem Kupplungsteil angeordnet. Beim Auskuppeln bewegt sich das Kupplungsteil relativ zum feststehenden Teil in Richtung der Drehachse. Die Bremseinrichtung zwischen feststehendem Teil und einem Kupplungsteil wird betätigt. Vorteilhaft umfasst die Bremseinrichtung einen Bremsbelag. Vorteilhaft ist der Bremsbelag am feststehenden Teil festgelegt und wird beim Auskuppeln gegen das Kupplungsteil gedrückt. Dadurch ist das Kupplungsteil im ausgekuppelten Zustand über den Bremsbelag mit dem feststehenden Teil wirkverbunden. Das Werkzeug ist im ausgekuppelten Zustand über den Bremsbelag mit dem feststehenden Teil drehfest wirkverbunden.

Vorteilhaft ist das feststehende Teil ein Gussteil. Vorteilhaft umfasst das Gussteil Versteifungsrippen. Vorteilhaft umfasst das Gussteil mindestens eine Aufnahme für ein Befestigungselement. Durch die Versteifungsrippen sind über das feststehende Teil große Kräfte übertragbar, und gleichzeitig ist das Gewicht des Gussteils reduziert. Durch die Anordnung von Aufnahmen für Befestigungselemente am Gussteil kann das Gussteil direkt am Arbeitsgerät befestigt sein, wobei die Befestigung beispielsweise an einem Fahrgestell oder am Gehäuse erfolgen kann.

Vorteilhaft umfasst das bewegte Teil eine Abdeckung. Vorteilhaft ist die Abdeckung an der Seite des bewegten Teils angeordnet, die der Kupplung zugewandt ist. Die Abdeckung umfasst insbesondere Schmutzaussparungen. Vorteilhaft sind die Schmutzaussparungen am Ende eines Führungselements angeordnet. Damit kann bei Drehung des bewegten Teils Schmutz von den Führungsprofilen durch die Schmutzaussparungen ausgetragen werden.

Weitere Merkmale der Erfindung ergeben sich aus der Beschreibung und der Zeichnung. Ein Ausführungsbeispiel der Erfindung wird im Folgenden anhand der Zeichnung erläutert. Es zeigen:
- Fig. 1: eine schematische, perspektivische Darstellung eines Arbeitsgeräts,
- Fig. 2: eine perspektivische, ausschnittsweise Schnittdarstellung durch das Arbeitsgerät,
- Fig. 3: eine ausschnittsweise Schnittdarstellung durch ein Ausführungsbeispiel einer Antriebseinheit und durch eine Verschiebekulisse mit einem feststehenden und einem bewegten Teil,
- Fig. 4 und 5: perspektivische Ansichten des feststehenden Teils,
- Fig. 6: eine Draufsicht des feststehenden Teils,
- Fig. 7: eine Unteransicht des feststehenden Teils,
- Fig. 8 und 9: perspektivische Ansichten des bewegten Teils,
- Fig. 10: eine perspektivische Ansicht der Betätigungseinrichtung,
- Fig. 11 und 12: perspektivische Schnittdarstellungen durch die Betätigungseinrichtung,
- Fig. 13: eine Draufsicht der Betätigungseinrichtung im eingekuppelten Zustand,
- Fig. 14: eine Draufsicht der Betätigungseinrichtung im ausgekuppelten Zustand,
- Fig. 15: eine perspektivische Ansicht der Betätigungseinrichtung im eingekuppelten Zustand,
- Fig. 16: eine perspektivische Ansicht der Betätigungseinrichtung im ausgekuppelten Zustand,
- Fig. 17: einen perspektivischen Schnitt durch die Betätigungseinrichtung im eingekuppelten Zustand,
- Fig. 18: einen perspektivischen Schnitt durch die Betätigungseinrichtung im ausgekuppelten Zustand,
- Fig. 19: einen perspektivischen Schnitt durch die Betätigungseinrichtung,
- Fig. 20: eine perspektivische, ausschnittsweise Darstellung des Arbeitsgeräts mit Blick auf das Werkzeug,
- Fig. 21 und 22: schematische Darstellungen des Querschnitts eines Führungsprofils in zwei Ausführungsvarianten.

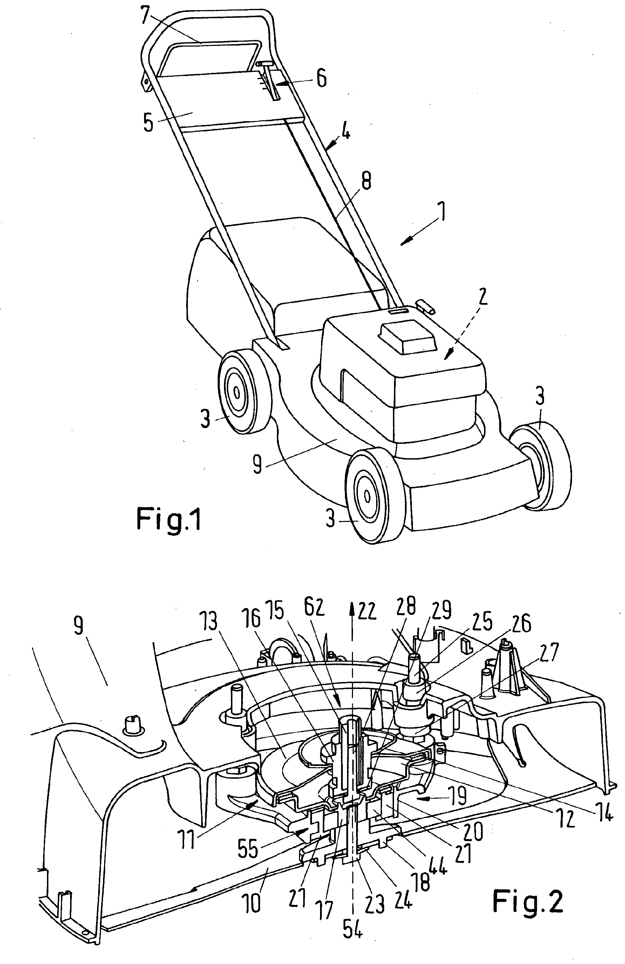

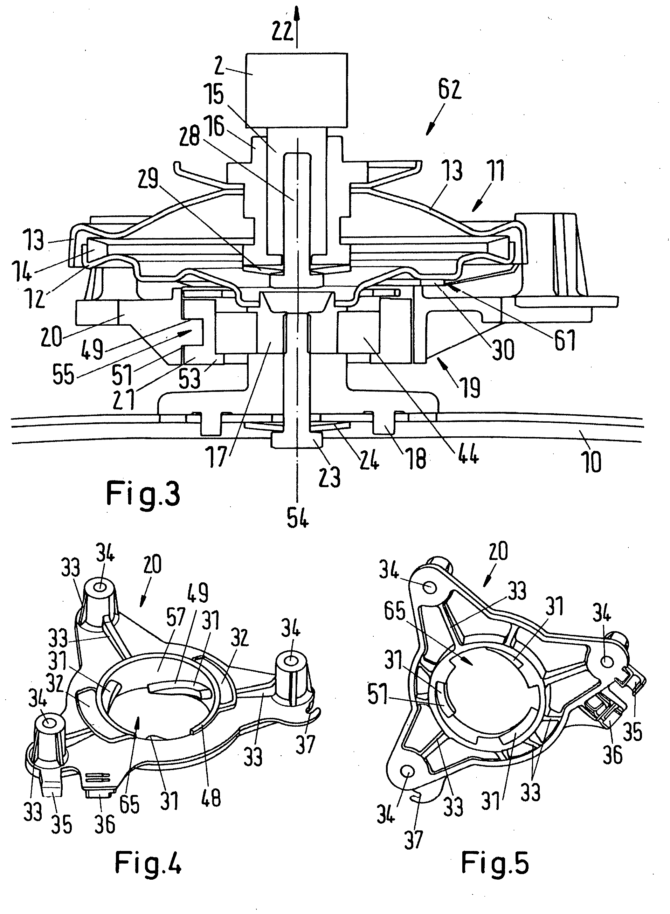

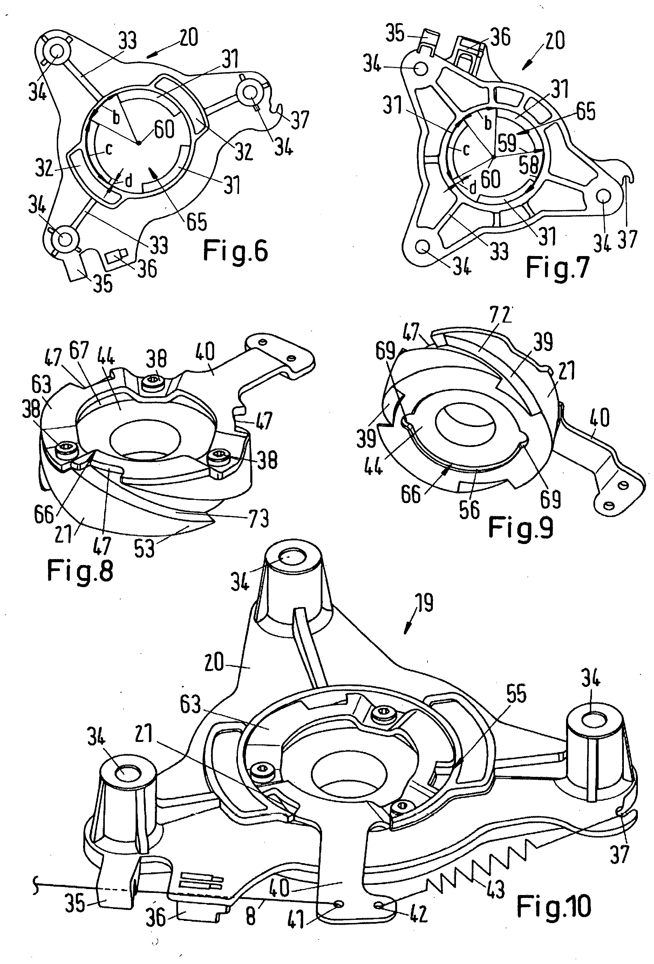

Fig. 1 zeigt als Ausführungsbeispiel für ein Arbeitsgerät einen Rasenmäher 1. Der Rasenmäher 1 verfügt über vier Räder 3, welche an einem Gehäuse 9 festgelegt sind. Am Gehäuse 9 ist ein Griffbügel 4 festgelegt. Ein Bediener kann den Griffbügel 4 greifen und den Rasenmäher 1 am Griffbügel 4 führen. Am Griffbügel 4 ist ein Bedienhebel 6 angeordnet. Der Bedienhebel 6 ist mit einem ersten Ende eines Seilzugs 8 verbunden. Der Rasenmäher 1 verfügt über eine in Fig. 2 dargestellte Betätigungseinrichtung 19. Das zweite Ende des Seilzugs 8 ist mit der Betätigungseinrichtung 19 verbunden, wie in Fig. 10 gezeigt. Eine Betätigung des Bedienhebels 6 steuert über den Seilzug 8 die Betätigungseinrichtung 19 an. Die Betätigung des Bedienhebels 6 erfolgt durch Verschwenken des in Fig. 1 gezeigten Bedienhebels 6. Am Griffbügel 4 ist schwenkbar ein Bedienbügel 7 gelagert. Ein Verschwenken des Bedienbügels 7 entsperrt den Bedienhebel 6. Dadurch kann der Bedienhebel 6 betätigt werden. Der Bedienhebel 6 ist an einer Griffplatte 5 angeordnet. Die Griffplatte 5 ist mit dem Griffbügel 4 fest verbunden, beispielsweise verschweißt oder verschraubt oder dergleichen. Der Rasenmäher 1 besitzt einen schematisch in Fig. 3 dargestellten Antriebsmotor 2, beispielsweise einen Elektromotor oder einen Verbrennungsmotor oder dergleichen. Wie Fig. 2 zeigt, treibt der Antriebsmotor 2 über eine Antriebseinheit 62 ein Werkzeug 10, beispielsweise ein Messer an. Das Gehäuse 9 überdeckt das Werkzeug 10 sowie einen Teil der Antriebseinheit 62.

Die Antriebseinheit 62 umfasst eine Antriebswelle 15. Die Antriebswelle 15 ist vom Antriebsmotor 2 drehend angetrieben. Die Antriebswelle 15 ist mit einer Nabe 16 drehfest verbunden. Im Ausführungsbeispiel ist ein Ende der Antriebswelle 15 in die Nabe 16 eingeführt. Die Nabe 16 umfasst das Ende der Antriebswelle 15. In die Antriebswelle 15 ist ein Bolzen 28 eingeschraubt. Zwischen dem Bolzen 28 und der Nabe 16 ist eine Unterlegscheibe 29 angeordnet. Bei festgezogenem Bolzen 28 sind die Antriebswelle 15, die Nabe 16, die Unterlegscheibe 29 und der Bolzen 28 drehfest miteinander verbunden. Die Antriebswelle 15, die Nabe 16, die Unterlegscheibe 29 und der Bolzen 28 sind um eine Drehachse 54 drehbar gelagert. Die Drehachse 54 steht annähernd orthogonal zum Boden beim mit allen Rädern 3 auf dem Boden aufstehenden Rasenmäher 1.

Die Antriebseinheit 62 umfasst eine Kupplung 11. Die Kupplung 11 besitzt ein erstes Kupplungsteil 12 und ein zweites Kupplungsteil 13. Das zweite Kupplungsteil 13 ist drehfest mit der Nabe 16 verbunden. Damit ist das zweite Kupplungsteil 13 antriebsseitig angeordnet. Das erste Kupplungsteil 12 ist abtriebsseitig angeordnet. Das erste Kupplungsteil 12 ist drehfest mit dem Werkzeug 10 verbunden. Zwischen dem ersten Kupplungsteil 12 und dem zweiten Kupplungsteil 13 ist ein Kupplungsbelag 14 angeordnet. Im Ausführungsbeispiel ist der Kupplungsbelag 14 am ersten Kupplungsteil 12 festgelegt. Im eingekuppelten Zustand dreht sich die Kupplung 11 mit dem ersten Kupplungsteil 12 und dem zweiten Kupplungsteil 13 um die Drehachse 54. Im ausgekuppelten Zustand steht das erste Kupplungsteil 12. Eine Verschiebung des ersten Kupplungsteils 12 entlang der Drehachse 54 in Richtung des zweiten Kupplungsteils 13 kuppelt die Kupplung 11 ein. Eine Verschiebung des ersten Kupplungsteils 12 entlang der Drehachse 54 in Richtung weg vom zweiten Kupplungsteil 13 kuppelt die Kupplung 11 aus. Im Ausführungsbeispiel kuppelt die Kupplung 11 bei einer Verschiebung des ersten Kupplungsteils 12 entlang der Drehachse 54 in Richtung vom ersten Kupplungsteil 12 zum zweiten Kupplungsteil 13 ein. Die Richtung vom ersten Kupplungsteil 12 zum zweiten Kupplungsteil 13 entlang der Drehachse 54 ist als Axialrichtung 22 bezeichnet. In Fig. 2 ist die Kupplung 11 im ausgekuppelten Zustand dargestellt.

Die Betätigungseinrichtung 19 ist mit dem ersten Kupplungsteil 12 wirkverbunden. Die Betätigungseinrichtung 19 umfasst ein feststehendes Teil 20 und ein bewegtes Teil 21. Das feststehende Teil 20 ist im Ausführungsbeispiel als Gussteil, insbesondere als Aluminiumdruckgussteil ausgeführt. Das feststehende Teil 20 kann auch als Zinkdruckgussteil, als Kunststoffteil oder dergleichen ausgeführt sein. Das bewegte Teil 21 ist im Ausführungsbeispiel als Gussteil, insbesondere als Zinkdruckgussteil ausgeführt. Das bewegte Teil 21 kann auch als Aluminiumdruckgussteil, Kunststoffteil oder dergleichen ausgeführt sein.

Das feststehende Teil 20 ist mit dem Gehäuse 9 fest verbunden. Das feststehende Teil 20 ist auch mit dem Antriebsmotor 2 fest verbunden. Im Ausführungsbeispiel ist das feststehende Teil 20 über einen Bolzen 25 mit dem Gehäuse 9 und mit dem Antriebsmotor 2 verschraubt. Zwischen Gehäuse 9 und Bolzen 25 ist ein dreiteiliges Vibrationsdämpfungselement angeordnet. Das Vibrationsdämpfungselement umfasst eine Außenbuchse 26, insbesondere eine gedrehte Buchse, eine Innenbuchse 27, insbesondere ein Gummiteil, und ein nicht gezeigtes Gummielement. Zwischen Gehäuse 9 und Außenbuchse 26 ist das Gummielement angeordnet. Die Innenbuchse 27 berührt das Gehäuse 9. In einer weiteren Ausführungsvariante kann das Vibrationsdämpfungselement zwischen Gehäuse 9 und Bolzen 25 auch aus nur einem Element, insbesondere einem Gummielement aufgebaut sein. Auch ein anderer Aufbau eines Vibrationsdämpfungselements kann vorteilhaft sein. Das Vibrationsdämpfungselement dämpft weitgehend die Übertragung von Vibrationen vom Gehäuse 9 auf das feststehende Teil 20, sowie vom feststehenden Teil 20 auf das Gehäuse 9.

Das bewegte Teil 21 ist innerhalb des feststehenden Teils 20 drehbar angeordnet. Das bewegte Teil 21 ist um die Drehachse 54 drehbar. Die Antriebseinheit 62 umfasst eine Verschiebekulisse 55. Die Verschiebekulisse 55 wandelt eine Drehung des bewegten Teils 21 in eine Verschiebung des bewegten Teils 21 in Axialrichtung 22 um. Hierbei berühren sich das bewegte Teil 21 und das feststehende Teil 20 mindestens abschnittsweise an mindestens einer am feststehenden Teil 20 ausgebildeten, in Fig. 3 gezeigten Führungsfläche 49, 51. Die Funktionsweise der Verschiebekulisse 55 ist ähnlich zu einer Schraubverbindung, bei der ein Teil drehbar relativ zum anderen Teil ist und eine Drehbewegung zu einer Translationsbewegung führt. Das bewegte Teil 21 ist drehbar relativ zum feststehenden Teil 20. Bei einer Drehung des bewegten Teils 21 bewegt sich das bewegte Teil 21 aufgrund der Verschiebekulisse zusätzlich in Richtung der Drehachse 54. Die Drehbewegung erfolgt um die Drehachse 54. In der Verschiebekulisse 55 sind Toleranzen zwischen bewegtem Teil 21 und feststehendem Teil 20 vorgesehen. Die Toleranzen lassen ein Spiel zwischen bewegtem Teil 21 und feststehendem Teil 20 zu. Aufgrund der Toleranzen kann die Richtung der Translationsbewegung des bewegten Teils 21 von der Richtung der Drehachse 54 um bis zu 5° abweichen.

Die Kupplungsnabe 17 ist über ein in Fig. 2 schematisch dargestelltes Lager 44 im bewegten Teil 21 gelagert. Die Kupplungsnabe 17 ist drehfest, insbesondere fest mit dem ersten Kupplungsteil 12 verbunden. Das Lager 44 ermöglicht die Übertragung von Kräften in Axialrichtung 22 vom bewegten Teil 21 auf die Kupplungsnabe 17. Eine Verschiebung des bewegten Teils 21 in Axialrichtung 22 verschiebt das erste Kupplungsteil 12 in Axialrichtung 22. Dadurch kuppelt die Kupplung 11 ein. Eine Verschiebung des bewegten Teils 21 entgegen der Axialrichtung 22 verschiebt das erste Kupplungsteil 12 entgegen der Axialrichtung 22. Dadurch kuppelt die Kupplung 11 aus.

Ein Werkzeughalter 18 ist über einen Bolzen 23 mit der Kupplungsnabe 17 drehfest verbunden. Mit dem Werkzeughalter 18 ist das Werkzeug 10 drehfest verbunden. Zwischen Bolzen 23 und Werkzeughalter 18 ist eine Unterlegscheibe 24 angeordnet. Im Ausführungsbeispiel ist das Werkzeug 10 durch den Bolzen 23 fest mit dem Werkzeughalter 18 verschraubt.

Der Kraftfluss in Richtung der Drehachse 54 im eingekuppelten Zustand vom Antriebsmotor 2 zum Werkzeug 10 erfolgt über die Antriebswelle 15, die Nabe 16, das zweite Kupplungsteil 13, den Kupplungsbelag 14, das erste Kupplungsteil 12, die Kupplungsnabe 17 und über den Werkzeughalter 18. Zwischen Werkzeughalter 18 und erstem Kupplungsteil 12 sind das Lager 44, das bewegte Teil 21 und die Verschiebekulisse 55 angeordnet.

Fig. 3 zeigt eine Ausführungsvariante der Antriebseinheit 62 in einer vergrößerten Schnittdarstellung, wobei die Kupplung 11 im ausgekuppelten Zustand dargestellt ist. In der Ausführungsvariante nach Fig. 3 ist der Kupplungsbelag 14 trapezförmig ausgeführt. Der trapezförmige Querschnitt des Kupplungsbelags 14 kann in einer weiteren Ausgestaltung auch keilförmig, rechteckig (Fig. 2) oder dergleichen sein.

Die Antriebseinheit 62 umfasst eine Bremseinrichtung 61 (Fig. 3). Die Bremseinrichtung 61 unterbindet das Drehen des Werkzeugs 10 im ausgekuppelten Zustand. Die Bremseinrichtung 61 umfasst mindestens einen Bremsbelag 30, der zwischen dem ersten Kupplungsteil 12 und dem feststehenden Teil 20 wirkt. Im Ausführungsbeispiel sind zwei Bremsbeläge 30 vorgesehen. Der Bremsbelag 30 ist mit dem feststehenden Teil 20 drehfest, insbesondere fest verbunden, beispielsweise verschraubt, vernietet, verklebt oder dergleichen. Im ausgekuppelten Zustand berührt das erste Kupplungsteil 12 den Bremsbelag 30. Durch Reibung zwischen dem Bremsbelag 30 und dem ersten Kupplungsteil 12 wird das erste Kupplungsteil 12 festgehalten. Damit steht im ausgekuppelten Zustand das Werkzeug 10 fest, und eine Drehung des Werkzeugs 10 ist unterbunden. Im eingekuppelten Zustand ist zwischen Bremsbelag 30 und erstem Kupplungsteil 12 ein Freiraum vorhanden. Die Bremse ist gelöst.

Die Fig. 4 bis 7 zeigen das feststehende Teil 20 in verschiedenen Ansichten, wobei die Fig. 4 und 6 das feststehende Teil 20 von der Oberseite, also der der Kupplung 11 zugewandten Seite zeigen. Die Fig. 5 und 7 zeigen das feststehende Teil 20 von der Unterseite, also der dem Boden zugewandten Seite. Das feststehende Teil umfasst drei Aufnahmen 34 für Befestigungselemente. In die Aufnahmen 34 für Befestigungselemente ist im eingebauten Zustand jeweils der Bolzen 25 eingeführt, um das feststehende Teil 20 mit dem Gehäuse 9 zu verbinden. Am feststehenden Teil 20 sind mehrere Versteifungsrippen 33 angebracht. Die Versteifungsrippen 33 erhöhen die Stabilität und die Verwindungssteifigkeit des feststehenden Teils 20. Die Versteifungsrippen 33 sind sowohl an der Ober- als auch an der Unterseite des feststehenden Teils 20 angebracht. Das feststehende Teil 20 besitzt eine zylindrische Aussparung 65. Die zylindrische Aussparung 65 erstreckt sich von der Unterseite zur Oberseite des feststehenden Teils 20. Im eingebauten Zustand fällt die Achse, um die die zylindrische Aussparung 65 - ohne Führungsprofile 31 - rotationssymmetrisch ist, mit der Drehachse 54 zusammen. Das feststehende Teil 20 ist an der zylindrischen Aussparung 65 durch eine Innenwand 57 begrenzt. Das feststehende Teil 20 umfasst mindestens ein, im Ausführungsbeispiel drei Führungsprofile 31. Die drei Führungsprofile 31 sind an der Innenwand 57 mit kreisförmigem Querschnitt, die zur Drehachse 54 parallel verläuft, festgelegt. Die Führungsprofile 31 sind einteilig mit dem feststehenden Teil 20 ausgeführt. Die Führungsprofile 31 können auch als separate Bauteile ausgeführt sein, die mit dem feststehenden Teil 20 fest verbunden, beispielsweise verschraubt, vernietet oder dergleichen, sind. Die Führungsprofile 31 sind Bestandteil der Verschiebekulisse 55. Die Führungsprofile 31 verlaufen wendelförmig an der Innenwand 57. Die Führungsprofile 31 schrauben sich entlang der Innenwand 57 in Richtung der Drehachse 54. Damit erstrecken sich die Führungsprofile 31 in Richtung der Drehachse 54. Die Führungsprofile 31 bilden ein Gewinde im feststehenden Teil 20.

Im feststehenden Teil 20 sind zwei Bremsbelagaussparungen 32 eingelassen. In den Bremsbelagaussparungen 32 sind die Bremsbeläge 30 festgelegt. Durch eine umlaufende Wand an den Bremsbelagaussparungen 32 können die Bremsbeläge 30 relativ zum feststehenden Teil 20 positioniert werden. Die umlaufende Wand unterstützt zusätzlich die Verbindung zwischen feststehendem Teil 20 und Bremsbelag 30, beispielsweise durch Aufnahme von Schubkräften, die vom Bremsbelag 30 auf das feststehende Teil 20 übertragen werden.

Am feststehenden Teil 20 sind eine Seilzugführung 35 und ein Seilzughälter 36 angeordnet. Die Seilzugführung 35 und der Seilzughalter 36 kragen aus dem feststehenden Teil 20 aus. Die Seilzugführung 35 und der Seilzughalter 36 sind einteilig mit dem feststehenden Teil 20 ausgeführt. In einer weiteren Ausführungsvariante können die Seilzugführung 35 und der Seilzughalter 36 auch am feststehenden Teil 20 festgelegt, beispielsweise verschraubt, verklebt, vernietet oder dergleichen sein. Die Seilzugführung 35 ist benachbart zu einer Aufnahme 34 für ein Befestigungselement angeordnet. Der Seilzug 8 ist von der Seilzugführung 35 und vom Seilzughalter 36 geführt.

Das feststehende Teil 20 umfasst einen Haken 37. Der Haken 37 kragt aus dem feststehenden Teil 20 aus. Der Haken 37 ist benachbart zu der Aufnahme 34 für ein Befestigungselement angeordnet. In den Haken 37 ist eine Rückstellfeder 43 (Fig. 10) eingehängt. Die Funktion der Rückstellfeder 43 wird nachfolgend noch näher beschrieben.

Die Fig. 6 und 7 zeigen das feststehende Teil 20 in Blickrichtung der Drehachse 54. Die zylindrische Aussparung 65 besitzt einen Kreismittelpunkt 60. Der Kreismittelpunkt 60 fällt auf die Drehachse 54. Eine Radialrichtung 59 ist die Richtung, die vom Kreismittelpunkt 60 zur Innenwand 57 zeigt. Eine Umfangsrichtung 58 ist die Richtung, die in Fig. 7, also bei Blickrichtung entlang der Drehachse 54 in Richtung Kupplung 11, im Uhrzeigersinn entlang des kreisförmigen Querschnitts der Innenwand 57 zeigt. Das Führungsprofil 31 besitzt eine Radiallänge d. Die Radiallänge d erstreckt sich von der Innenwand 57 in die zylindrische Aussparung 65. Das Führungsprofil 31 besitzt eine Umfangslänge c, die in Umfangsrichtung 58 entlang der Innenwand 57 vom Anfang zum Ende des Führungsprofils 31 gemessen ist. Die Umfangslänge c der Führungsfläche 49, 51 eines Führungsprofils 31 erstreckt sich über mindestens 5% des Umfangs der Innenwand 57. Die Umfangslänge c der Führungsfläche 49, 51 eines Führungsprofils 31 kann sich über mindestens 15%, insbesondere mindestens 20% des Umfangs der Innenwand 57 erstrecken. Bei mehr als einem Führungsprofil 31 ergibt die Summe aller Umfangslängen c der Führungsflächen 49, 51 in Umfangsrichtung 58 der Innenwand 57 mindestens 15% des Umfangs der Innenwand 57. Bei mehr als einem Führungsprofil 31 kann die Summe aller Umfangslängen c der Führungsflächen 49, 51 in Umfangsrichtung 58 der Innenwand 57 mindestens 50%, insbesondere mindestens 60% des Umfangs der Innenwand 57 ergeben. Zwischen zwei benachbarten Führungsprofilen 31 existiert ein Freiraum. In Umfangsrichtung 58 entlang der Innenwand 57 besitzt der Freiraum eine Freilänge b. Die Freilänge b beginnt am Ende eines ersten Führungsprofils 31 und endet am Anfang eines zweiten, benachbarten Führungsprofils 31.

Die Fig. 8 und 9 zeigen das bewegte Teil 21 in verschiedenen perspektivischen Ansichten. Das bewegte Teil 21 ist zylinderförmig und besitzt eine zylindrische Aussparung 66. Die zylindrische Aussparung 66 weist eine Mantelinnenfläche 67 auf. Das bewegte Teil 21 umfasst einen Außenmantel 53. Der Außenmantel 53 ist die Oberfläche des bewegten Teils 21, die nicht von der Mantelinnenfläche 67 umfasst ist. Der Außenmantel 53 des bewegten Teils 21 besitzt Führungselemente 39. Die Führungselemente 39 sind als Vertiefungen in dem Außenmantel 53 des bewegten Teils 21 ausgebildet. Die Führungselemente 39 sind einteilig mit dem bewegten Teil 21 ausgeführt. In einer weiteren Ausführungsvariante können die Führungselemente 39 auch am Außenmantel 53 befestigt, beispielsweise verschraubt sein. Im eingebauten Zustand führen die Führungselemente 39 des bewegten Teils 21 das Führungsprofil 31 des feststehenden Teils 20. Im Ausführungsbeispiel sind die Führungselemente 39 nutförmig ausgeführt. Die Nut umfasst eine obere Berührfläche 72 und eine untere Berührfläche 73. Die obere Berührfläche 72 des bewegten Teils 21 berührt beim Einkuppeln die erste, obere Führungsfläche 49 des feststehenden Teils 20. Die obere Berührfläche 72 gleitet auf der ersten, oberen Führungsfläche 49. Die untere Berührfläche 73 des bewegten Teils 21 berührt beim Auskuppeln die zweite, untere Führungsfläche 51 des bewegten Teils. Die untere Berührfläche 73 gleitet auf der zweiten, unteren Führungsfläche 51. Die Nut öffnet zur Außenseite des bewegten Teils 21. Durch die nutförmige Gestaltung der Führungselemente 39 des bewegten Teils 21 ist gewährleistet, dass das Führungsprofil 31 des feststehenden Teils 20 umschlossen ist. Damit ist das bewegte Teil 21 sowohl in Radialrichtung 59, als auch in Umfangsrichtung 58 und damit auch in Axialrichtung 22 geführt. In einer weiteren Ausführungsvariante kann das Führungsprofil 31 auch am bewegten Teil 21 und das Führungselement 39 am feststehenden Teil 20 angeordnet sein.

Die Erstreckung des in Fig. 6 und 7 dargestellten Führungsprofils 31 in Umfangsrichtung 58 der Innenwand 57 ist kleiner als die Erstreckung des in Fig. 8 und 9 gezeigten Führungselements 39 in Umfangsrichtung der Innenwand 57. Das Führungsprofil 31 ist als Rippe und das Führungselement 39 ist als Nut ausgebildet. Die Nut und die Rippe sind geometrisch so geformt, dass die Rippe von der Nut geführt werden kann. Die Querschnitte von Rippe und Nut sind weitgehend kongruent. Das Führungsprofil 31 ist stets im Führungselement 39 geführt. Die Rippe - Nut - Verbindung gewährleistet eine Führung des bewegten Teils 21 im feststehenden Teil 20.

Das Lager 44 berührt mindestens teilweise die Mantelinnenfläche 67 des bewegten Teils 21 und liegt auf einem Absatz 56 des bewegten Teils 21 auf. Der Absatz 56 ist einteilig mit dem bewegten Teil 21 ausgeführt und besitzt zwei Kerben 69. Beim Entfernen des Lagers 44 vom bewegten Teil 21 kann das Lager 44 im Bereich der Kerben 69 ausgeschoben werden. In Axialrichtung 22 ist das erste Ende des Lagers 44 durch eine Abdeckung 63 gesichert. Das zweite Ende des Lagers 44 liegt auf dem Absatz 56 des bewegten Teils 21 auf. Damit können Kräfte in Axialrichtung 22 vom bewegten Teil 21 auf das Lager 44 übertragen werden. Es können auch Kräfte entgegen der Axialrichtung 22 vom bewegten Teil 21 auf das Lager 44 übertragen werden. Die Abdeckung 63 ist an der Oberseite des bewegten Teils 21, also der der Kupplung 11 zugewandten Seite, angeordnet und über drei Befestigungsschrauben 38 angeschraubt. Die Abdeckung 63 kann auch an der Unterseite des bewegten Teils 21, also der der Kupplung 11 abgewandten Seite, angeordnet sein. Die Abdeckung 63 ist als Blechbiegeteil hergestellt. Die Abdeckung liegt bündig auf dem bewegten Teil 21 auf. Im Bereich der Befestigungsschrauben 38 ist die Abdeckung 63 in Richtung auf das bewegte Teil 21 gewölbt. Damit schließen die Köpfe der Befestigungsschrauben 38 bündig mit der Oberseite der Abdeckung 63 ab.

Die Verschiebekulisse 55 umfasst mindestens ein, im Ausführungsbeispiel drei Führungselemente 39. Die Führungselemente 39 sind am bewegten Teil 21 ausgebildet. An der Abdeckung 63 des bewegten Teils 21 sind Schmutzaussparungen 47 angebracht. Schmutzpartikel können von der Verschiebekulisse 55, nämlich von den Führungsprofilen 31, durch die Schmutzaussparungen 47 aus den Führungselementen 39 ausgeschoben werden. An der Abdeckung 63 sind drei Schmutzaussparungen 47 angeordnet. Die Schmutzaussparungen 47 sind quaderförmig ausgebildet und an der radial außen liegenden Seite der Abdeckung 63 angeordnet. Die Schmutzaussparungen 47 sind jeweils am Ende eines Führungselements 39 angeordnet. Die nutförmige Gestaltung der Führungselemente 39 ist in den Schmutzaussparungen 47 fortgesetzt.

Die Abdeckung 63 umfasst einen Hebel 40. Im eingebauten Zustand kragt der Hebel 40 von der Drehachse 54 aus, insbesondere senkrecht zur Drehachse 54. Am Hebel 40 sind eine erste Bohrung 41 und eine zweite Bohrung 42 vorgesehen (Fig. 10). In der ersten Bohrung 41 ist ein Ende des Seilzugs 8 festgelegt. In der zweiten Bohrung 42 ist die Rückstellfeder 43 eingehängt. Die erste Bohrung 41 und die zweite Bohrung 42 können auch durch eine Aufnahme, beispielsweise durch eine Langnut, durch einen Haken oder dergleichen ausgeführt sein. Zwischen zweiter Bohrung 42 und Haken 37 ist die Rückstellfeder 43 angeordnet. Die Rückstellfeder 43 ist als Zugfeder ausgeführt. Die Rückstellfeder 43 übt eine Kraft auf das bewegte Teil 21 in die Richtung aus, in der die Kupplung 11 auskuppelt. In einer weiteren Ausführungsvariante kann die Rückstellfelder 43 auch eine Kraft auf das bewegte Teil 21 in die Richtung ausüben, in der die Kupplung 11 einkuppelt. In einer weiteren Ausführungsvariante kann das bewegte Teil 21 durch einen mechanischen Hebel, einen Seilzug oder dergleichen oder durch die Schwerkraft, insbesondere ohne eine Rückstellfeder 43, in die Richtung gedreht werden, in der die Kupplung 11 auskuppelt. In einer weiteren Ausführungsvariante kann das bewegte Teil 21 durch einen mechanischen Hebel, einen Seilzug oder dergleichen oder durch die Schwerkraft, insbesondere ohne eine Rückstellfeder 43, in die Richtung gedreht werden, in der die Kupplung 11 einkuppelt.

Anstelle eines Seilzugs 8 kann in der ersten Bohrung 41 auch ein Gestänge oder dergleichen eingehängt sein. Beim Ziehen am Seilzug 8 dreht das bewegte Teil 21 entgegen der Kraft der Rückstellfeder 43, so dass die Kupplung 11 einkuppelt. Um die Kupplung 11 im eingekuppelten Zustand zu halten, muss die Kraft am Seilzug 8 ständig größer sein als die Kraft der Rückstellfeder 43. Dazu ist der mit dem Seilzug 8 verbundene Bedienhebel 6 im eingekuppelten Zustand mit dem Griffbügel 4 mechanisch verriegelbar.

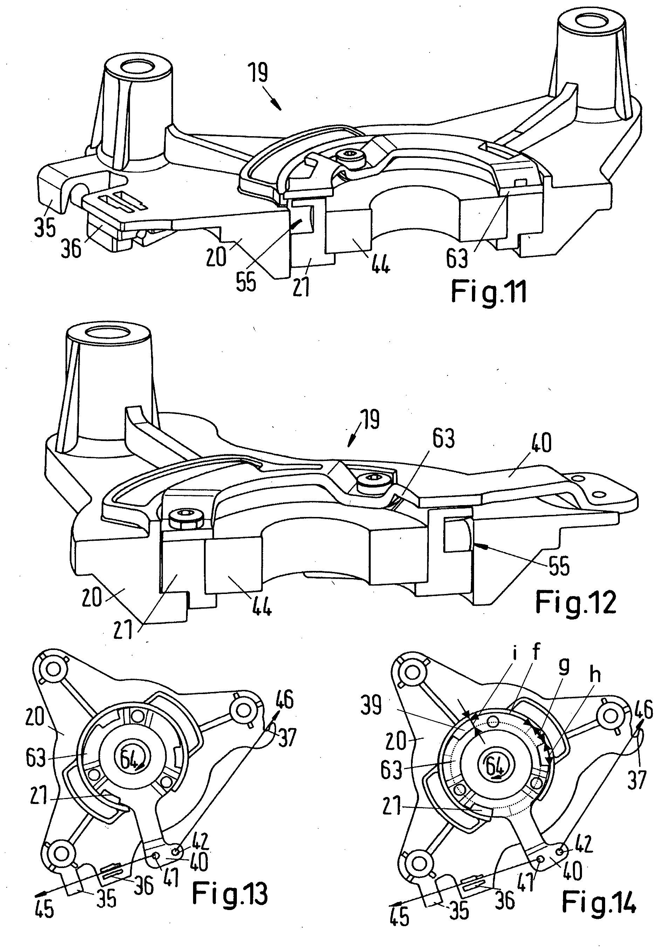

Die Fig. 11 und 12 zeigen die Betätigungseinrichtung 19 in einem perspektivischen Schnitt. Das bewegte Teil 21 ist im feststehenden Teil 20 angeordnet. Über die Verschiebekulisse 55 ist das bewegte Teil 21 relativ zum feststehenden Teil 20 geführt. Das Lager 44 ist fest mit dem bewegten Teil 21 verbunden. Dadurch folgt das Lager 44 den Bewegungen des bewegten Teils 21.

Die Fig. 13 bis 18 zeigen die Betätigungseinrichtung 19 im eingekuppelten und ausgekuppelten Zustand, wobei in den Fig. 13, 15 und 17 die Betätigungseinrichtung 19 im eingekuppelten Zustand der Kupplung 11, und in den Fig. 14, 16 und 18 die Betätigungseinrichtung 19 im ausgekuppelten Zustand der Kupplung 11 dargestellt ist. Durch Ziehen des Seilzugs 8 dreht sich infolge der Seilzugkraft in einer in Figur 13 gezeigten Seilzugkraftrichtung 45 das bewegte Teil 21 in einer Einkuppeldrehrichtung 64. Die Einkuppeldrehrichtung 64 ist die Richtung, in der das bewegte Teil 21 dreht, um die Kupplung 11 einzukuppeln. Eine Drehung entgegen der Einkuppeldrehrichtung 64 des bewegten Teils 21 kuppelt die Kupplung 11 aus. Die Einkuppeldrehrichtung 54 ist bei Blickrichtung entlang der Drehachse 54 in Richtung Werkzeug 10 im Uhrzeigersinn orientiert. In einer weiteren Ausführungsvariante kann die Einkuppeldrehrichtung 64 auch entgegen des Uhrzeigersinns orientiert sein.

Infolge der Drehbewegung bewegt die Verschiebekulisse 55 das bewegte Teil 21 in Axialrichtung 22. Dadurch kuppelt das über das Lager 44 mit dem ersten Kupplungsteil 12 verbundene bewegte Teil 21 die Kupplung 11 ein. Die Drehbewegung beim Einkuppeln wird durch eine Kraft über den Seilzug 8 hervorgerufen, die auf das bewegte Teil 21 wirkt, die größer ist als die Kraft der Rückstellfeder 43 und die der Kraft der Rückstellfeder 43 entgegenwirkt. Diese Kraft über den Seilzug 8 muss von einem Bediener über den Bedienhebel 6 in den Seilzug eingeleitet werden, wobei im eingekuppelten Zustand durch Arretierung des Bedienhebels 6 die Kraft aufrecht erhalten werden kann.

Beim Auskuppeln gibt der Bediener den Bedienhebel 6 und damit den Seilzug 8 frei. Beim Auskuppeln prägt die Rückstellfeder 43 in einer Federkraftrichtung 46, die entgegen der Seilzugkraftrichtung 45 gerichtet ist, eine Kraft auf den Hebel 40 auf. Dadurch dreht das bewegte Teil 21 entgegen der Einkuppeldrehrichtung 64. Infolge dieser Drehung bewegt sich das bewegte Teil 21 entgegen der Axialrichtung 22. Die Verschiebekulisse 55 transformiert auch beim Auskuppeln eine Drehbewegung in eine Translationsbewegung, die in Richtung der Drehachse 54 gerichtet ist. Die Kraft der Rückstellfeder 43 ist so bemessen, dass die Zeitdauer ab dem Lösen des Bedienhebels 6 vom eingekuppelten Zustand zum Stillstand des Werkzeugs 10 weniger als drei Sekunden beträgt.

Fig. 14 zeigt das bewegte Teil 21 im in der Betätigungseinrichtung 19 eingebauten Zustand. Das Führungselement 39 besitzt eine Nuttiefe i. Die Nuttiefe i beschreibt die Tiefe des in Fig. 9 als Nut ausgeführten Führungselements 39. Das Führungselement 39 besitzt eine in Fig. 14 gezeigte erste Öffnungslänge g und eine zweite Öffnungslänge h. Die erste Öffnungslänge g ist an der Oberseite des bewegten Teils 21, also der der Kupplung 11 zugewandten Seite gemessen. Die erste Öffnungslänge g entspricht der Länge der Öffnung der Nut an der Stirnseite an der Oberseite des bewegten Teils 21. Die zweite Öffnungslänge h ist an der Unterseite des bewegten Teils 21, also der der Kupplung 11 abgewandten Seite gemessen. Die zweite Öffnungslänge h entspricht der Länge der Öffnung der Nut an der Stirnseite an der Unterseite des bewegten Teils 21. Im Ausführungsbeispiel ist die erste Öffnungslänge g gleich lang wie die zweite Öffnungslänge h. Beim Zusammenbau der Betätigungseinrichtung 19 kann aufgrund der Öffnung der Nut das bewegte Teil 21 in das feststehende Teil 20 eingeschraubt werden. Das bewegte Teil 21 besitzt eine Umfanglänge f. Die Umfangslänge f des bewegten Teils 21 ist konzentrisch zur in Fig. 7 dargestellten Umfangsrichtung 58. Die Umfangslänge f des bewegten Teils 21 ist länger als die erste Öffnungslänge g. Die Umfangslänge f des bewegten Teils 21 ist länger als die zweite Öffnungslänge h. Die Radiallänge i des bewegten Teils 21 beträgt weniger als 50% der Umfanglänge f des bewegten Teils 21. Die Radiallänge i kann auch weniger als 10%, insbesondere weniger als 5% der Umfangslänge f betragen. Im Ausführungsbeispiel beträgt die Radiallänge i des bewegten Teils 21 13% der Umfangslänge f des bewegten Teils 21.

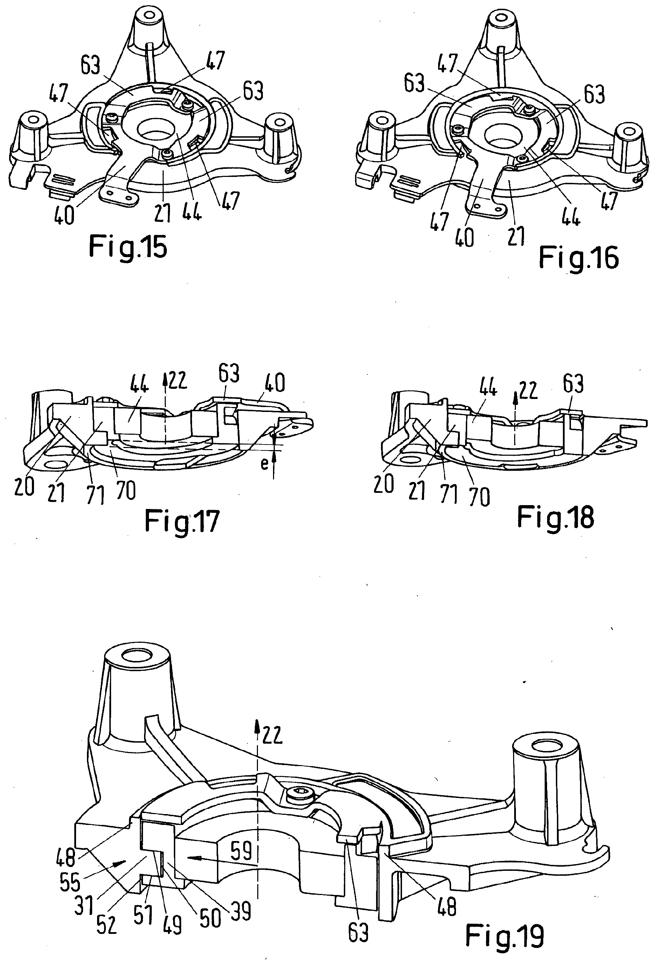

Wie ein Vergleich von Fig. 17 und Fig. 18 zeigt, hat sich das bewegte Teil 21 im eingekuppelten Zustand (Fig. 17) gegenüber dem ausgekuppelten Zustand (Fig. 18) relativ zum feststehenden Teil 20 in Axialrichtung 22 bewegt. Das bewegte Teil 21 besitzt eine Unterseite 70. Das feststehende Teil 20 besitzt eine Unterseite 71. Die Unterseite 70 des bewegten Teils 21 hat im eingekuppelten Zustand (Fig. 17) einen Abstand e von der Unterseite 71 des feststehenden Teils 20. Beim Auskuppeln bewegt sich das bewegte Teil 21 entgegen der Axialrichtung 22, und der Abstand e verringert sich. Der Abstand e kann dabei auch kleiner als null werden, so dass die Unterseite 70 unterhalb der Unterseite 71 zu liegen kommt. Die Unterseite 70 besitzt dann einen kleineren Abstand zum Boden als die Unterseite 71. Die Unterseite 70, 71 ist die Seite, die bei mit den Rädern 3 auf dem Boden stehenden Rasenmäher 1 dem Boden zugewandt ist. Wie Fig. 18 zeigt, liegt die Unterseite 70 des bewegten Teils 21 im ausgekuppelten Zustand nahezu in einer Ebene mit der Unterseite 71 des feststehenden Teils 20. Im ausgekuppelten Zustand besitzen die Unterseite 71 und die Unterseite 70 keinen Abstand.

In Fig. 19 ist das Zusammenwirken des bewegten Teils 21 mit dem feststehenden Teil 20 mittels der Verschiebekulisse 55 dargestellt. Zwischen bewegtem Teil 21 und feststehendem Teil 20 berührt das Führungsprofil 31 das Führungselement 39. Die Berührung erfolgt entlang den Führungsflächen 49,51. Die Führungsflächen 49, 51 umfassen eine obere Führungsfläche 49 und eine untere Führungsfläche 51. Beim Einkuppeln gleitet das bewegte Teil 21 im Wesentlichen auf der oberen Führungsfläche 49 auf dem feststehenden Teil 20. Beim Auskuppeln gleitet das bewegte Teil 21 im Wesentlichen auf der unteren Führungsfläche 51 auf dem feststehenden Teil 20. In Radialrichtung 59 berühren sich das bewegte Teil 21 und das feststehende Teil 20 an einer inneren Gleitfläche 50 und an einer äußeren Gleitfläche 52. Die Gleitflächen 50, 52 werden bei Berührung der Teile 20, 21 als Berührflächen gebildet und liegen an beiden Teilen 20, 21 an. Die innere Gleitfläche 50 und die äußere Gleitfläche 52 dienen zur Zentrierung des bewegten Teils 21. Die Zentrierung erfolgt sowohl während der Drehung des bewegten Teils 21, als auch im eingekuppelten und ausgekuppelten Zustand. In einer weiteren Ausführungsvariante kann zwischen feststehendem Teil 20 und bewegtem Teil 21 Spiel vorhanden sein; hierbei entstehen keine Gleitflächen 50, 52. Die Zentrierung des bewegten Teils 21 erfolgt hierbei durch den in Fig. 3 dargestellten Kupplungsbelag 14, welcher das mit dem bewegten Teil 21 wirkverbundene erste Kupplungsteil 12 relativ zum zweiten Kupplungsteil 13 zentriert.

Durch einen in Fig. 19 gezeigten, am feststehenden Teil 20 angebrachten Rand 48 wird das Eindringen von Schmutz in die Verschiebekulisse 55 weitgehend verhindert. Der Rand 48 ist einteilig mit dem feststehenden Teil 20 ausgeführt. Der Rand 48 erhebt sich in Axialrichtung 22 über die Oberseite des feststehenden Teils 20, die der Kupplung 11 zugewandt ist. Eine Oberseite des Randes 48 ist in Verlängerung der Innenwand 57 der zylindrischen Aussparung 65 des feststehenden Teils 20 angeordnet.

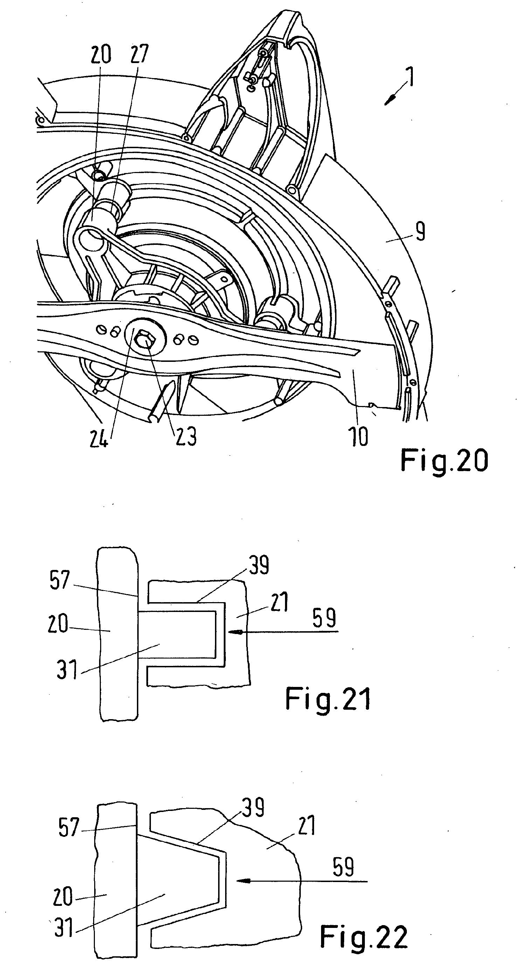

Fig. 20 zeigt in perspektivischer Darstellung das am Rasenmäher 1 festgelegte Werkzeug 10. Das Werkzeug 10 ist über den Bolzen 23 mit dem Werkzeughalter 18 drehfest verbunden. Zwischen dem Kopf des Bolzens 23 und dem Werkzeug 10 ist eine Unterlegscheibe 24 angeordnet.

Die Fig. 21 und 22 zeigen schematisch Ausführungsvarianten des Querschnitts eines Führungsprofils 31. In einer Ausführungsvariante (Fig. 21) ist der Querschnitt des Führungsprofils 31 rechteckig. Der Querschnitt des Führungselements 39 des bewegten Teils 21 ist entsprechend rechteckig ausgeführt. In einer weiteren Ausführungsvariante (Fig. 22) ist der Querschnitt des Führungsprofils 31 trapezförmig. Das Trapez verjüngt sich von der Innenwand 57 ausgehend entgegen der Radialrichtung 59. Der Querschnitt des Führungselements 39 des bewegten Teils 21 ist entsprechend trapezförmig ausgeführt. In einer weiteren Ausführungsvariante kann der Querschnitt des Führungsprofils 31 auch dreieckig sein. Der Querschnitt des Führungselements 39 des bewegten Teils 21 ist entsprechend dreieckig ausgeführt.

## Patentansprüche

1. Arbeitsgerät mit einer Kupplung (11) und einem Antriebsmotor (2), der über die Kupplung (11) ein Werkzeug (10) antreibt, wobei die Kupplung (11) um eine Drehachse (54) drehbar ist, wobei die Kupplung (11) ein erstes Kupplungsteil (12) und ein zweites Kupplungsteil (13) umfasst, wobei durch eine Verschiebung des ersten Kupplungsteils (12) relativ zum zweiten Kupplungsteil (13) entlang der Drehachse (54) die Kupplung (11) einkuppelt, wobei das erste Kupplungsteil (12) durch eine Betätigungseinrichtung (19) in Richtung der Drehachse (54) verschiebbar ist, wobei die Betätigungseinrichtung (19) ein feststehendes Teil (20) und ein relativ zum feststehenden Teil (20) bewegtes Teil (21) umfasst, wobei das bewegte Teil (21) mit dem ersten Kupplungsteil (12) in Richtung der Drehachse (54) wirkverbunden ist,
wobei die Betätigungseinrichtung (19) eine Verschiebekulisse (55) umfasst, die durch eine Drehung des bewegten Teils (21) um die Drehachse (54) relativ zum feststehenden Teil (20) das bewegte Teil (21) in Richtung der Drehachse (54) bewegt, wobei die Verschiebekulisse (55) mindestens zwei Führungsprofile (31) und mindestens zwei Führungselemente (39) umfasst, wobei die Führungsprofile (31) die Fuhrungselemente (39) jeweils entlang einer Führungsfläche (49, 51) führen, und
wobei jedes Führungsprofil (31) mindestens eine Führungsfläche (49, 51) besitzt,
**dadurch gekennzeichnet, dass** am feststehenden Teil (20) die mindestens zwei Führungsprofile (31) der Verschiebekulisse (55) an einer zur Drehachse (54) parallelen Innenwand (57) mit kreisförmigem Querschnitt und am bewegten Teil (21) die mindestens zwei Führungselemente (39) der Verschiebekulisse ausgebildet sind, und dass die Summe aller Umfangslängen (c) der Führungsflächen (49, 51) der Führungsprofile (31) in Umfangsrichtung (58) der Innenwand (57) mindestens 40% des Umfangs der Innenwand (57) ergibt.

2. Arbeitsgerät nach Anspruch 1,
**dadurch gekennzeichnet, dass** eine Umfangslänge (c) der Führungsfläche (49, 51) in Umfangsrichtung (58) der Innenwand (57) länger ist als eine Radiallänge (d) der Führungsfläche (49, 51) in Radialrichtung (59) der Innenwand (57), wobei die Radialrichtung (59) senkrecht zur Umfangsrichtung (58) steht und vom Kreismittelpunkt (60) des kreisförmigen Querschnitts der Innenwand (57) weg zeigt.

3. Arbeitsgerät nach Anspruch 2,
**dadurch gekennzeichnet, dass** sich die Umfangslänge (c) der Führungsfläche (49, 51) über mindestens 5% des Umfangs der Innenwand (57) erstreckt.

4. Arbeitsgerät nach einem der Ansprüche 1 bis 3,
**dadurch gekennzeichnet, dass** die Erstreckung des Führungsprofils (31) in Umfangsrichtung (58) der Innenwand (57) kleiner ist als die Erstreckung des Führungselements (39) in Umfangsrichtung (58) der Innenwand (57).

5. Arbeitsgerät nach einem der Ansprüche 1 bis 4,
**dadurch gekennzeichnet, dass** das Führungsprofil (31) das Führungselement (39) beim Einkuppeln entlang einer ersten Führungsfläche (49) führt und dass das Führungsprofil (31) das Führungselement (39) beim Auskuppeln entlang einer zweiten Führungsfläche (51) führt.

6. Arbeitsgerät nach einem der Ansprüche 1 bis 5,
**dadurch gekennzeichnet, dass** das feststehende Teil (20) drei Führungsprofile (31) umfasst.

7. Arbeitsgerät nach einem der Ansprüche 1 bis 6,
**dadurch gekennzeichnet, dass** in Blickrichtung der Drehachse (54) zwischen dem Ende eines ersten Führungsprofils (31) und dem Anfang eines zweiten, benachbarten Führungsprofils (31) in Umfangsrichtung (58) ein Freiraum mit Freilänge (b) besteht.

8. Arbeitsgerät nach Anspruch 7,
**dadurch gekennzeichnet, dass** die Freilänge (b) kleiner ist als die Umfangslänge (c).

9. Arbeitsgerät nach einem der Ansprüche 1 bis 8,
**dadurch gekennzeichnet, dass** das Führungsprofil (31) als Rippe, und dass das Führungselement (39) als Nut ausgebildet ist.

10. Arbeitsgerät nach einem der Ansprüche 1 bis 9,
**dadurch gekennzeichnet, dass** das Führungsprofil (31) einen viereckigen, insbesondere einen rechteckigen oder trapezförmigen Querschnitt besitzt, oder dass das Führungsprofil (31) einen dreieckigen Querschnitt besitzt.

11. Arbeitsgerät nach einem der Ansprüche 1 bis 10,
**dadurch gekennzeichnet, dass** das bewegte Teil (21) einen Hebel (40) umfasst, wobei der Hebel (40) von der Drehachse (54) auskragt.

12. Arbeitsgerät nach einem der Ansprüche 1 bis 11,
**dadurch gekennzeichnet, dass** am bewegten Teil (21) eine Rückstellfeder (43) angeordnet ist, wobei die Rückstellfeder (43) das bewegte Teil (21) in der Richtung vorspannt, in welcher bei Drehung des bewegten Teils (21) die Kupplung (11) auskuppelt.

13. Arbeitsgerät nach Anspruch 12,
**dadurch gekennzeichnet, dass** die Rückstellfeder (43) zwischen bewegtem Teil (21) und feststehendem Teil (20) wirkt.

14. Arbeitsgerät nach einem der Ansprüche 1 bis 13,
**dadurch gekennzeichnet, dass** zwischen feststehendem Teil (20) und erstem Kupplungsteil (12) eine Bremseinrichtung (61) wirkt.

15. Arbeitsgerät nach Anspruch 14,
**dadurch gekennzeichnet, dass** die Bremseinrichtung (61) einen Bremsbelag (30) umfasst und der Bremsbelag (30) am feststehenden Teil (20) festgelegt ist.

## Claims

1. Working implement with a clutch (11) and a drive motor (12) driving a tool (10) via the clutch (11), wherein the clutch (11) is rotatable about an axis of rotation (54), wherein the clutch (11) comprises a first clutch part (12) and a second clutch part (13), wherein the clutch (11) engages by way of a displacement of the first clutch part (12) relative to the second clutch part (13) along the axis of rotation (54), wherein the first clutch part (12) is displaceable in the direction of the axis of rotation (54) by an actuating device (19), wherein the actuating device (19) comprises a stationary part (20) and a part (21) moved relative to the stationary part (20), wherein the moved part (21) is operationally connected to the first clutch part (12) in the direction of the axis of rotation (54), wherein the actuating device (19) comprises a displacement gate (55) which, by a rotation of the moved part (21) about the axis of rotation (54) relative to the stationary part (20), moves the moved part (21) in the direction of the axis of rotation (54), wherein the displacement gate (55) comprises at least two guide profiles (31) and at least two guide elements (30), wherein the guide profiles (31) guide each of the guide elements (30) along a guide surface (49, 51), and wherein each of the guide profiles (31) has at least one guide surface (49, 51),
**characterised in that** on the stationary part (20) the at least two guide profiles (31) of the displacement gate (55) are formed at an inner wall (57) parallel to the axis of rotation (54) and having a circular cross-section, and on the moved part (21) the at least two guide elements (30) of the displacement gate (55) are formed, and **in that** the sum of all circumferential lengths (c) of the guide surfaces (49, 51) of the guide profiles (31) in the circumferential direction (58) of the inner wall (57) amounts to at least 40% of the circumference of the inner wall (57).

2. Working implement according to claim 1,
**characterised in that** a circumferential length (c) of the guide surface (49, 51) in the circumferential direction (58) of the inner wall (57) is greater than a radial length (d) of the guide surface (49, 51) in the radial direction (59) of the inner wall (57), wherein the radial direction (59) is perpendicular to the circumferential direction (58) and points away from the centre of the circle (60) of the circular cross-section of the inner wall (57).

3. Working implement according to claim 2,
**characterised in that** the circumferential length (c) of the guide surface (49, 51) extends along at least 5% of the circumference of the inner wall (57).

4. Working implement according to any of claims 1 to 3,
**characterised in that** the dimension of the guide profile (31) in the circumferential direction (58) of the inner wall (57) is less than the dimension of the guide element (39) in the circumferential direction (58) of the inner wall (57).

5. Working implement according to any of claims 1 to 4,
**characterised in that** the guide profile (31) guides the guide element (39) along a first guide surface (49) in the engagement process, and **in that** the guide profile (31) guides the guide element (39) along a second guide surface (51) in the disengagement process.

6. Working implement according to any of claims 1 to 5,
**characterised in that** the stationary part (20) comprises three the guide profiles (31).

7. Working implement according to any of claims 1 to 6,
**characterised in that** in the direction of view of the axis of rotation (54), there is a space with a free length (b) between the end of a first guide profile (31) and the start of a second, adjacent guide profile (31) in the circumferential direction (58).

8. Working implement according to claim 7,
**characterised in that** the free length (b) is less than the circumferential length (c).

9. Working implement according to any of claims 1 to 8,
**characterised in that** the guide profile (31) is designed as a rib and the guide element (39) is designed a s groove.

10. Working implement according to any of claims 1 to 9,
**characterised in that** the guide profile (31) has a quadrilateral, in particular rectangular of trapezoidal, cross-section, or **in that** the guide profile (31) has a triangular cross-section.

11. Working implement according to any of claims 1 to 10,
**characterised in that** the moved part (21) comprises a lever (40), the lever projecting from the axis of rotation (54).

12. Working implement according to any of claims 1 to 11,
**characterised in that** a return spring (43) is located on the moved part (21), the return spring (43) preloading the moved part (21) in a direction in which the clutch (11) disengages at a rotation of the moved part (21).

13. Working implement according to claim 12,
**characterised in that** the return spring (43) acts between the moved part (21) and the stationary part (20).

14. Working implement according to any of claims 1 to 13,
**characterised in that** a braking device (61) acts between the stationary part (20) and the first clutch part (12).

15. Working implement according to claim 14,
**characterised in that** the braking device (61) comprises a brake pad (30) and the brake pad (30) is fixed to the stationary part (20).

## Revendications

1. Appareil de travail avec un accouplement (11) et un moteur d'entraînement (2) qui entraîne un outil (10) par l'intermédiaire de l'accouplement (11), l'accouplement (11) étant apte à tourner sur un axe de rotation (54), l'accouplement (11) comprenant un premier élément d'accouplement (12) et un second élément d'accouplement (13), l'accouplement (11) s'enclenchant grâce à un déplacement du premier élément d'accouplement (12) par rapport au second élément d'accouplement (13) le long de l'axe de rotation (54), le premier élément d'accouplement (12) étant apte à être déplacé par un dispositif d'actionnement (19) dans le sens de l'axe de rotation (54), le dispositif d'actionnement (19) comprenant un élément (20) fixe et un élément (21) mobile par rapport à l'élément fixe (20), l'élément mobile (21) étant en relation fonctionnelle avec le premier élément d'accouplement (12) dans le sens de l'axe de rotation (54), le dispositif d'actionnement (19) comprenant une coulisse de déplacement (55) qui, grâce à une rotation de l'élément mobile (21) sur l'axe de rotation (54) par rapport à l'élément fixe (20), déplace ledit élément mobile (21) dans le sens de l'axe de rotation (54), la coulisse de déplacement (55) comprenant au moins deux profilés de guidage (31) et au moins deux éléments de guidage (39), les profilés de guidage (31) guidant les éléments de guidage (39) le long de surfaces de guidage respectives (49, 51), et chaque profilé de guidage (31) présentant au moins une surface de guidage (49, 51),
**caractérisé en ce que** sur l'élément fixe (20), les deux profilés de guidage (31), ou plus, de la coulisse de déplacement (55) sont formés sur une paroi intérieure (57) parallèle à l'axe de rotation (54) et à section transversale ronde, et sur l'élément mobile (21) sont formés les deux éléments de guidage (39), ou plus, de la coulisse de déplacement,
et **en ce que** la somme de toutes les longueurs circonférentielles (c) des surfaces de guidage (49, 51) des profilés de guidage (31) dans le sens circonférentiel (58) de la paroi intérieure (57) représente au moins 40% de la circonférence de ladite paroi intérieure (57).

2. Appareil de travail selon la revendication 1,
**caractérisé en ce qu'**une longueur circonférentielle (c) de la surface de guidage (49, 51) dans le sens circonférentiel (58) de la paroi intérieure (57) est plus longue qu'une longueur radiale (d) de la surface de guidage (49, 51) dans le sens radial (59) de la paroi intérieure (57), le sens radial (59) étant perpendiculaire au sens circonférentiel (58) et s'éloignant du centre (60) de la section transversale circulaire de la paroi intérieure (57).

3. Appareil de travail selon la revendication 2,
**caractérisé en ce que** la longueur circonférentielle (c) de la surface de guidage (49, 51) s'étend sur au moins 5% de la circonférence de la paroi intérieure (57).

4. Appareil de travail selon l'une des revendications 1 à 3,
**caractérisé en ce que** l'extension du profilé de guidage (31) dans le sens circonférentiel (58) de la paroi intérieure (57) est plus petite que l'extension de l'élément de guidage (39) dans le sens circonférentiel (58) de la paroi intérieure (57).

5. Appareil de travail selon l'une des revendications 1 à 4,
**caractérisé en ce que** le profilé de guidage (31) guide l'élément de guidage (39) le long d'une première surface de guidage (49), lors de l'enclenchement, et **en ce que** le profilé de guidage (31) guide l'élément de guidage (39) le long d'une seconde surface de guidage (51), lors du désenclenchement.

6. Appareil de travail selon l'une des revendications 1 à 5,
**caractérisé en ce que** l'élément fixe (20) comprend trois profilés de guidage (31).

7. Appareil de travail selon l'une des revendications 1 à 6,
**caractérisé en ce que** si on regarde dans le sens de l'axe de rotation (54), il y a dans le sens circonférentiel (58) un espacement d'une longueur libre (b) entre la fin d'un premier profilé de guidage (31) et le début d'un second profilé de guidage (31) voisin.

8. Appareil de travail selon la revendication 7,
**caractérisé en ce que** la longueur libre (b) est plus petite que la longueur circonférentielle (c).

9. Appareil de travail selon l'une des revendications 1 à 8,
**caractérisé en ce que** le profilé de guidage (31) est conçu comme une nervure, et **en ce que** l'élément de guidage (39) est conçu comme une rainure.

10. Appareil de travail selon l'une des revendications 1 à 9,
**caractérisé en ce que** le profilé de guidage (31) présente une section transversale quadrangulaire, en particulier rectangulaire ou trapézoïdale, ou **en ce que** le profilé de guidage (31) présente une section transversale triangulaire.

11. Appareil de travail selon l'une des revendications 1 à 10,
**caractérisé en ce que** l'élément mobile (21) comprend un levier (40), le levier (40) dépassant de l'axe de rotation (54).

12. Appareil de travail selon l'une des revendications 1 à 11,
**caractérisé en ce qu'**il est prévu sur l'élément mobile (21) un ressort de rappel (43), le ressort de rappel (43) contraignant l'élément mobile (21) dans le sens dans lequel l'accouplement (11) se désenclenche, lors de la rotation dudit élément mobile (21).

13. Appareil de travail selon la revendication 12,
**caractérisé en ce que** le ressort de rappel (43) agit entre l'élément mobile (21) et l'élément fixe (20).

14. Appareil de travail selon l'une des revendications 1 à 13,
**caractérisé en ce qu'**un dispositif de freinage (61) agit entre l'élément fixe (20) et le premier élément d'accouplement (12).

15. Appareil de travail selon la revendication 14,
**caractérisé en ce que** le dispositif de freinage (61) comprend une garniture de frein (30), et la garniture de frein (30) est fixée à l'élément fixe (20).
